(19) Europäisches Patentamt

European Patent Office

Office européen des brevets

(11) EP 0 932 143 B1

(12) EUROPEAN PATENT SPECIFICATION

(45) Date of publication and mention
of the grant of the patent:
**20.04.2005 Bulletin 2005/16**

(51) Int Cl.$^7$: **G10L 15/14**

(21) Application number: **99300463.9**

(22) Date of filing: **22.01.1999**

(54) **Voice pattern recognition using average covariance matrices**

Sprachmustererkennung unter Verwendung von Durchschnitts-Kovarianzmatrizen

Reconnaissance de formes de la parole utilisant des matrices de covariance moyennes

(84) Designated Contracting States:
**DE FR**

(30) Priority: **23.01.1998 JP 1090198**

(43) Date of publication of application:
**28.07.1999 Bulletin 1999/30**

(73) Proprietor: **PIONEER ELECTRONIC CORPORATION**
**Meguro-ku Tokyo-to (JP)**

(72) Inventor: **Fujita, Ikuo,**
**c/o Pioneer Electronic Corp.**
**Kawagoe-shi, Saitama-ken (JP)**

(74) Representative: **Haley, Stephen**
**Gill Jennings & Every,**
**Broadgate House,**
**7 Eldon Street**
**London EC2M 7LH (GB)**

(56) References cited:
**EP-A- 0 074 667          EP-A- 0 533 491**
**US-A- 5 715 367**

- **"Speaker-independent labeling in discrete-parameter continuous speech recognition systems" IBM TECHNICAL DISCLOSURE BULLETIN,US,IBM CORP. NEW YORK, vol. 37, no. 2A, pages 625-627, XP000433471 ISSN: 0018-8689**
- **HUANG X.D.; JACK M.A.: 'Unified techniques for vector quantization and hidden Markov modeling using semi-continuous models' ICASSP 1989 vol. 1, 23 May 1989 - 26 May 1989, GLASGOW, UK, pages 639 - 642**
- **COHEN A.; FROIND I.: 'On text independent speaker identification using a quadratic classifier with optimal features' SPEECH COMMUNICATION vol. 8, no. 1, 1989, AMSTERDAM, NL, pages 35 - 44**

**Description**

The present invention generally relates to a pattern recognizing apparatus such as a voice recognizing apparatus, and more particularly to a pattern recognizing apparatus for performing a calculation to recognize a pattern by expressing a distribution of the recognized pattern with a multiple dimensional normal distribution.

There is a method of pattern-recognizing various information, which is sensible by a human being, by use of a computer. Especially, a voice recognition for recognizing a voice pronounced by a human being and understanding the content of a language thereof is important as an elemental technique of a human interface.

In case of performing such a pattern recognition represented by the voice recognition by use of a computer, there is a pattern recognizing method to which a probability model is applied as a statistical property of an information source is noticed. For example, the Hidden Marcov Model (HMM), which expresses a transition of the condition due to a time series of a voice pattern by use of a probability, is representative. In this type of method, a characteristic vector necessary to recognize the pattern is extracted from the information source, and the extracted characteristic vector is compared with a modeled standard pattern on the basis of a probability calculation, so as to recognize the pattern. The probability distribution of this standard pattern is expressed by a multiple dimensional normal distribution, and is described by an average vector and a covariance matrix. Here, in case that the dimension number of the characteristic vector is N, the covariance matrix becomes an $N \times M$ matrix. Thus, in this case, a calculation amount of the probability calculation in proportion to the square of the dimension number N is necessary. Further, in case that the total number of the standard patterns is M, this calculation amount increases in proportion to the total number M.

However, it may be necessary to increase the dimension number N of the characteristic vector in order to cope with a coding process for example, and it may be also necessary to increase the total number M of the standard patterns in order to perform a finer recognition process. As explained above, because the calculation amount increases in proportion to the square of the dimension number N and the total number M of the standard patterns in the probability calculation, an enormous calculation amount may be required in case that the values of these N and M are increased. Further, the memory amount required in correspondence with the calculation amount may be also increased in the same degrees.

On the other hand, in case of performing the recognizing process in the voice recognizing apparatus etc., since it is often performed in a real time manner, in order to cope with the increases of the calculation amount and the memory amount, a CPU (Central Processing Unit) having a high processing rate, a memory having a large memory capacity and so one, which are rather expensive parts, should be employed resulting in a significant increase of the cost of the apparatus. Namely, there is a problem that it is difficult to realize a pattern recognizing apparatus with a relatively low cost while keeping a certain quality by use of the probability model.

Unified techniques for vector quantisation and hidden Markob modeling using semi-continuous models, ICASSP 1989 Glasgow, May 1989, Volume 1, pages 639 to 642 discloses a pattern recognizing method employing a probability model in which each of a plurality of standard patents is expressed as a probability distribution defined by an average vector.

The document "On text independent speaker identification using a quadratic classifier with optimal features, Cohen A. and Froind I., Speech Communication 8, 1989, pages 35-44, discloses a speaker identification system which uses the average matrix of the covariance matrix of all of the standard patterns in the probability model.

It is therefore an object of the present invention to provide a pattern recognizing apparatus and method as well as a program storage device for a pattern recognition, which can reduce the required calculation amount and the required memory mount for the probability calculation while keeping the recognition capability to a relatively high level.

According to the present invention there is provided a pattern recognizing method of recognizing an input voice pattern by using a probability model, in which each of a plurality of standard patterns is expressed as a probability distribution defined by an average vector and a covariance matrix respectively, said pattern recognizing method comprising the steps of:

classifying the standard patterns into a predetermined number of classes;
for each of the classes, calculating an average matrix of the covariance matrices of the standard patterns in the class;
extracting a characteristic vector which indicates a characteristic feature of the input pattern;
performing a comparison based on a probability calculation between the extracted characteristic vector and respective one of the standard patterns by using the average matrix of the class to which the respective one of the standard pattern belongs as the covariance matrix for the respective one of the standard patterns; and
recognizing the input pattern on the basis of a result of the performed comparison.

According to the present invention there is also provided a pattern recognizing apparatus for recognizing an input voice pattern by using a probability model, in which each of a plurality of standard patterns is expressed as a probability distribution defined by an average vector and a covariance matrix respectively, said pattern recognizing apparatus comprising:

a classifying device arranged to classify, in use, the standard patterns into a predetermined number of classes;
a calculating device arranged to calculate, in use, for each of the classes an average matrix of the covariance matrices of the standard patterns in the class;
an extracting device arranged to extract, in use, a characteristic vector which indicates a characteristic feature of the input pattern;
a comparison performing device arranged to perform, in use, a comparison based on a probability calculation between the extracted characteristic vector and respective one of the standard patterns by using the average matrix of the class to which the respective one of the standard pattern belongs as the covariance matrix for the respective one of the standard patterns; and
a recognizing device arranged to recognize, in use, the input pattern on the basis of a result of the performed comparison.

According to the present invention there is provided a program storage device readable by a computer for a pattern recognition, tangibly embodying a program of instructions executable by said computer to perform method processes for recognizing an input voice pattern by using a probability model, in which each of a plurality of standard patterns is expressed as a probability distribution defined by an average vector and a covariance matrix respectively, said method processes comprising the steps of:

classifying the standard patterns into a predetermined number of classes;
for each of the classes, calculating an average matrix of the covariance matrices of the standard patterns in the class;
extracting a characteristic vector which indicates a characteristic feature of the input pattern;
performing a comparison based on a probability calculation between the extracted characteristic vector and respective one of the standard patterns by using the average matrix of the class to which the respective one of the standard patterns belongs as the covariance matrix for the respective one of the standard patterns; and
recognizing the input pattern on the basis of a result of the performed comparison.

The nature, utility, and further features of this invention will be more clearly apparent from the following detailed description with respect to preferred embodiments of the invention when read in conjunction with the accompanying drawings briefly described below.

In the drawings:-

Fig. 1 is a diagram showing a concept of the HMM (Hidden Markov Model) used in an embodiment of the present invention;
Fig. 2A is a graph indicating the HMM of discrete distribution type;
Fig. 2B is a graph indicating the HMM of continuous distribution type;
Fig. 3 is a block diagram of a voice recognition apparatus as the embodiment; and
FIG. 4 is a front appearance view of the voice recognizing apparatus.

Referring to the accompanying drawings, an embodiment of the present invention will be now explained. In the embodiment described below, the present invention is applied to a voice recognizing apparatus.

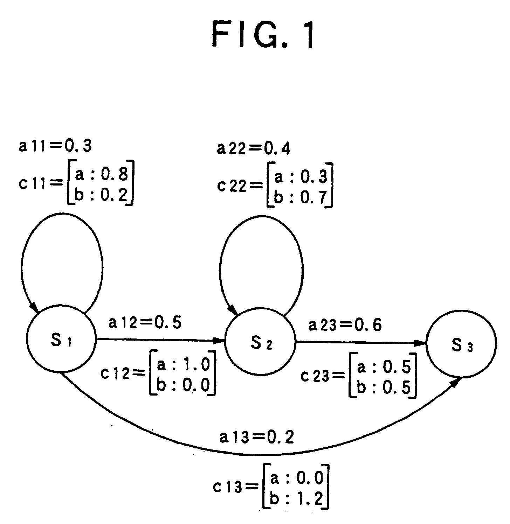

At first, a voice recognition by means of the HMM used in the embodiment is explained with reference to FIG. 1 to FIG. 2B.

The HMM is one kind of the Markov model characterized to have a plurality of conditions which are related to each other by a condition-transition-probability and to output a predetermined symbol series when one condition is transited to another condition. In a voice recognition, the Markov model of left-to-right type may be employed in which the time does not regress.

In the voice recognizing apparatus by means of the HMM, the HMMs as for all of the words as objectives for the recognition are generated and registered in a dictionary. Then, when recognizing the voice, the HMMs are read out one after another from the dictionary, and a probability (i.e., a likelihood) of outputting the observed symbol series, which is same as the inputted voice, is calculated as for each of the HMMs. The word corresponding to the HMM which gives the largest probability among those is outputted as the recognition result.

FIG. 1 shows an example of the HMM. This HMM is an example of a model, which is capable of outputting two symbols $\underline{a}$ and $\underline{b}$, and has three conditions S1 to S3 as internal conditions. The condition starts from the condition S1 and ends at the condition S3. Arrow lines connecting the conditions S1 to S3 represent condition-transitions respectively. Marks $a_{ij}$ written beside each arrow line represent condition-transition-probabilities respectively, and marks $c_{ij}$ represent symbol-output-probabilities corresponding to marks $a_{ij}$ respectively. An upper element in [ ] of the symbol-output-probability represents the output-probability of the symbol $\underline{a}$ and a lower element in [ ] of the symbol-output-probability represents output-probability of the symbol $\underline{b}$.

Now, assuming that the observed symbol series of the inputted voice is (aab) for example, the probability (i.e., the likelihood) that the HMM shown in FIG. 1 outputs this observed symbol series (aab) is calculated as following (refer to Ohgauchi Masaaki, "Voice Recognition by the Marcov Model", Electric Information Transmission Academy Papers, vol. April (1987)).

First of all, the length of the syllable of the observed symbol series (aab) is "3" of /a/a/b/. At this time, the transition route (path) though which the observed symbol series (aab) can be outputted in the HMM of FIG. 1 is limited to either one of three routes S1→S1→S2 →S3, S1→S2→S2→S3 and S1→S1→S1→S3.

The probability that the observed symbol series (aab) is outputted as for each transition route is obtained as following since it is expressed by the product of the symbol-output-probabilities cij and the condition-transition-probabilities aij along the transition route.

in case of S1→S1→S2→S3:

$$0.3 \times 0.8 \times 0.5 \times 1.0 \times 0.6 \times 0.5 = 0.036$$

in case of S1→S2→S2→S3:

$$0.5 \times 1.0 \times 0.4 \times 0.3 \times 0.6 \times 0.5 = 0.018$$

in case of S1→S1→S1→S3:

$$0.3 \times 0.8 \times 0.3 \times 0.8 \times 0.2 \times 1.0 = 0.01152$$

Since the probability of outputting the observed symbol series (aab) exists in either one of the above mentioned three transition routes, the sum of those three probabilities as following is the probability (likelihood) of outputting the observed symbol series (aab) in the HMM of FIG. 1.

$$0.036 + 0.018 + 0.01152 = 0.06552$$

Incidentally, the greatest value 0.036 of the above calculated three probabilities may be adopted as a representative of the probability of the HMM in a simplified way.

By performing the above explained calculation of the probability for all of the HMM registered in the dictionary and by outputting a word corresponding to the HMM which gives the greatest value from among the obtained probabilities as a recognition result, the inputted voice can be recognized.

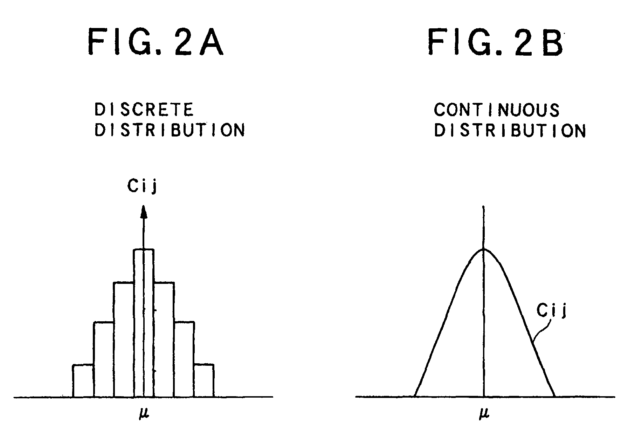

There are (i) the HMM of discrete distribution type in which the symbol-output-probabilities cij changes in a discontinuous manner as shown in FIG. 2A, and (ii) the HMM of continuous distribution type in which the symbol-output-probabilities cij changes in a continuous manner as shown in FIG. 2B. Among those two types, since a quantization error is generated in case of the HMM of discrete distribution type, it is preferable to employ the HMM of continuous distribution type for the voice recognition.

As shown in FIG. 2B, in case of the symbol-output-probabilities cij of the continuous distribution type, the probability distribution changes in conformity with the normal distribution. Then, this distribution can be prescribed by the average vector $\mu$ and the variance $\Sigma$ of the symbols. Therefore, in case of the HMM of continuous distribution type, the whole model is described by three parameters of the condition-transition-probabilities aij (refer to FIG. 1), the average vector $\mu$ and the variance $\Sigma$ of the symbols.

In order to make the above mentioned HMM as for each registered word, the above mentioned three parameters may be estimated by learning a large number of samples in the population expressing the voice models. As concrete examples of this estimating method, there are various algorithms such as a forward and backward algorithm for example.

As for the calculating method for the probability (likelihood) in which the HMM as shown in FIG, 1 outputs the predetermined observed symbol series (aab), there are various algorithms such as the forward algorithm and the Viterbi algorithm for example.

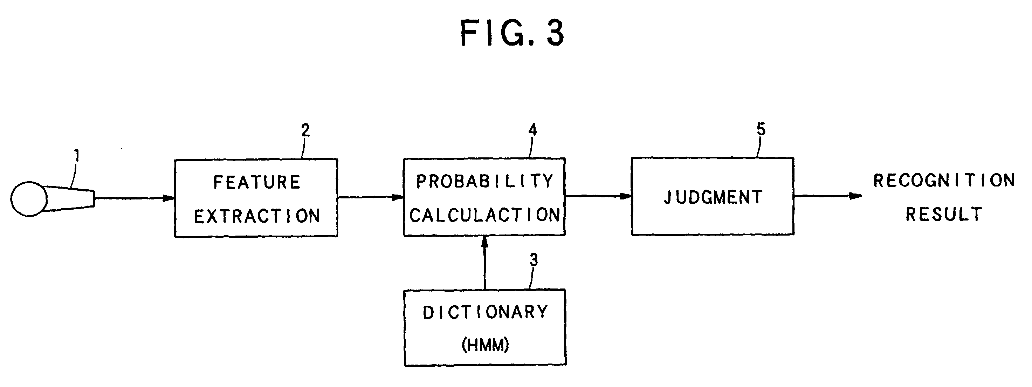

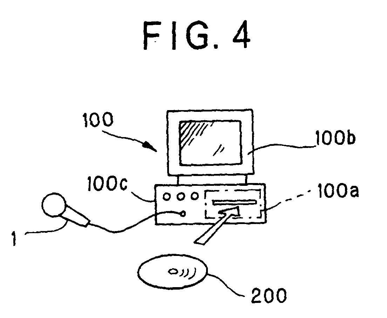

Next, the construction of the voice recognizing apparatus of the present embodiment is explained with reference to FIG. 3 and FIG. 4.

As shown in FIG. 3, the voice recognizing apparatus of the present embodiment is provided with: a microphone 1; a characteristic feature extraction unit 2 for extracting the characteristic vector, which is a vector of the parameter characterizing the feature of the voice, by analyzing the inputted voice through the microphone 1; a dictionary 3 for storing the HMM as for each word; a probability calculation unit 4 and a judgment unit 5. Incidentally, the voice recognizing apparatus of the present embodiment is expressed by functional blocks thereof, which are realized in a software manner by use of a microcomputer or a DSP (Digital Signal Processor) with a microphone 1 and other components to constitute the whole apparatus.

As shown in FIG. 4, a program to function the pattern recognizing apparatus of the present embodiment can be stored in a record medium 200, such as a ROM, a CD-ROM, a floppy disc or the like which is readable by a computer 100. The computer 100 is provided with: a reading device 100a for reading the record medium 200; a display device 100b for displaying various information including the recognition result, and a main body 100c to which the microphone 1 is connected. Then, by installing the program to the computer 100 by use of the record medium 200 so that the computer 100 can perform the installed program, the pattern recognizing apparatus (which includes: a CPU functioning as the characteristic feature extraction unit 2, the probability calculation unit 4 and a judgment unit 5; and a memory functioning as the dictionary 3 shown in FIG. 3) can be realized.

In FIG. 3, when a voice is pronounced toward the microphone 1, an inputted voice signal thereof is quarried out for each appropriate window length (i.e., a frame length) by the characteristic feature extraction unit 2, and is converted into the predetermined observed symbol series for each frame length (e.g., 10 dimensional mel-frequency cepstral coefficients) to be outputted to the probability calculation unit 4.

The probability calculation unit 4 reads out all of the HMM registered in the dictionary 3 one after another, and calculates the probability (likelihood) of generating the above mentioned observed symbol series as for each HMM.

The judgment unit 5 selects the HMM corresponding to the greatest probability from among the calculated probabilities, and outputs it as the recognition result corresponding to the inputted voice.

Here, the recognizing process performed by the probability calculation unit 4 and the judgment unit 5 is more concretely explained.

The characteristic vectors extracted by the characteristic feature extraction unit 2 are collectively treated as a vector for each frame or for each predetermined number of frames as a unit for processing the inputted voice, to constitute a characteristic vector $y$. Then, the comparison between each distribution $\theta i$ of the standard patterns of the HMM stored in the dictionary 3 and this characteristic vector $y$ is performed. Here, the dimension number of the vector is represented by N and the number of the distributions $\theta i$ of the standard patterns stored in the dictionary 3 is represented by M.

The distributions $\theta i$ of the standard patterns are expressed by the N dimensional average vector $\mu i$ of each distribution and the N×M dimensional covariance matrix $\Sigma i$. Then, when performing the comparison between the distribution $\theta i$ of each standard pattern and the characteristic vector $y$, a probability density function $bi$ is obtained by calculating a following expression.

$$bi(y, \mu i, \Sigma i) = \{1/((2\pi)^{\pi/2} | \Sigma i |^{1/2})\} \times e^{-(1/2)Di}$$

In the above expression, Di represents a distance between the characteristic vector and each standard pattern, and is expressed by a following expression.

$$Di = (y - \mu i) \, t \, \Sigma i\text{-}1(y - \mu i)$$

Wherein, a mark "t" represents a transposition and a mark "-1" represents an inverse matrix.

In order to obtain a recognition result on the basis of the above calculation, the calculation may be performed as for all of the standard patterns in the dictionary 3. At this time, since the terms $(y - \mu i) t$ and $(y - \mu i)$ are N dimensional while the term $\Sigma i\text{-}1$ is N×M dimensional and the number of the distributions $\theta i$ is M, the number of the calculations about M ×(N2+N) times is required. Further, as for the memory to store the progress of the calculation, the memory capacity corresponding to this number of the calculation is required. Therefore, if the dimension number N is set large, both of the process amount and the memory amount for the recognizing process are drastically increased, resulting in that it causes a hindrance especially in case that a real time processing is required.

In the present illustrative embodiment, in order to solve this problem, the reduction of the processing amount and the memory amount for the recognizing process is realized by the process explained hereinbelow.

Namely, at first, an average matrix $\Sigma$ a as for the M distributions $\theta i$ of the covariance matrix $\Sigma i$ is calculated. Then, when calculating the above mentioned distance Di, the covariance matrix $\Sigma i$ of each distribution is approximately replaced by $\Sigma a$. Here, since the inverse matrix $\Sigma a\text{-}1$ of the matrix $\Sigma a$ is a symmetrical matrix, it can be taken apart to a product of the N dimensional matrix A as expressed by a following expression.

$$\Sigma a\text{-}1 = A \, t \, A$$

Therefore, the distance Di can be calculated by a following expression.

$$Di = (y - \mu i) \, t \, \Sigma a\text{-}1(y - \mu i)$$

$$= (y - \mu i) \, A \, t \, A(y - \mu i)$$

$$= (Ay - A\mu i) \, t \, (Ay - A\mu i)$$

Here, in order to calculate the distance Di in this manner, it is enough to perform the calculation of the term $A\mu i$ only in case that the standard patterns in the dictionary 3 are changed. In other words, it is not necessary to perform the calculation of the term $A\mu i$ for each recognizing process. Further, it is also enough to perform the calculation of the term $A$ y only once, before performing the comparison between it and all of the M distributions $\theta i$.

Thus, the number of the calculations required to obtain the distance Di is about N2 + M × N times, and that, as for the memory to store the progress of the calculation, only the memory capacity corresponding to this number of the calculations is required. Therefore, both of the required calculation amount and the required memory amount can be significantly reduced in case of not-using the average matrix $\Sigma a$ as compared with the M × (N2 + N) times. Further, as the total number M of the standard patterns and the dimension number N are made the larger, the effect to reduce the calculation amount and the memory amount becomes the larger.

In this way, in case that the covariance matrix

$\Sigma i$ of each standard pattern is replaced by the average matrix $\Sigma a$ so as to perform an approximate probability calculation, the accuracy may be slightly degraded as compared with the case of performing the strict probability calculation. However, in the covariance matrix in the probability model, since the difference between each distribution is relatively small as compared with the average vector $\mu i$ for example, it does not give a substantial influence onto the final recognition result in the pattern recognizing process even if such an approximate calculation is performed. This point is experimentally confirmed.

In the above described embodiment, it is possible to calculate the average matrix $\Sigma a$ in advance and to stored the calculated average matrix $\Sigma a$ in the ROM etc., so as to use the stored average matrix $\Sigma a$ for the probability calculation by reading it out when performing the recognizing process. Alternatively, it is also possible to calculate the average matrix $\Sigma a$ in a real time manner when the recognizing process is actually performed, so as to use the calculated average matrix $\Sigma a$ for the probability calculation without calculating and storing it in advance. The former method is advantageous since the processing amount is relatively small as compared with the latter method, while the latter method is advantageous since it can flexibly cope with such a case that the amendment or correction of the value of the average matrix $\Sigma a$ is required along with a change of the combination of the standard data or the like.

Next, although, in the above described calculating method, only one average matrix of the covariance matrix is obtained with respect to a plurality of standard patterns registered in the dictionary 3, according to the present invention it is possible to obtain a plurality of average matrixes. More concretely, the distributions $\theta i$ of the standard patterns are classified into K classes (K < M) in dependence upon the respective characteristic features, and obtain the average matrix is obtained for the covariance matrix in each of the classes, so as to finally calculate the distance $Di$ by use of the average matrix in each of the classes. By this, the number of the calculations required to obtain $Di$ is about $K \times N2 + M \times N$ times, and that, as for the memory to store the progress of the calculation, only the memory amount corresponding to this number of the calculations is required. Therefore, although the effect to reduce the calculation amount and the memory amount is made slightly smaller than the case of obtaining just one average matrix, the accuracy of the probability calculation can be improved. Consequently, it is preferable to employ this calculation method especially in case of performing the pattern recognition, which is special and to which the high accuracy is required.

Incidentally, the present invention is defined in the appended claims.

The program to function the pattern recognizing apparatus of the present embodiment can be stored in a record medium 200 (refer to FIG. 1), such as a ROM, a CD-ROM, a floppy disc or the like which is readable by a computer 100. Then, by installing the program to the computer 100 by use of the record medium 200, so that the computer 100 can perform the installed program, the above described pattern recognizing apparatus can be realized.

**Claims**

1. A pattern recognizing method of recognizing an input voice pattern by using a probability model, in which each of a plurality of standard patterns is expressed as a probability distribution defined by an average vector and a covariance matrix respectively, said pattern recognizing method comprising the steps of:

    classifying the standard patterns into a predetermined number of classes;
    for each of the classes, calculating an average matrix of the covariance matrices of the standard patterns in the class;
    extracting a characteristic vector which indicates a characteristic feature of the input pattern;
    performing a comparison based on a probability calculation between the extracted characteristic vector and respective one of the standard patterns by using the average matrix of the class to which the respective one of the standard pattern belongs as the covariance matrix for the respective one of the standard patterns; and
    recognizing the input pattern on the basis of a result of the performed comparison.

2. A pattern recognizing method according to claim 1, wherein the input pattern comprises a pattern of a pronounced voice which is indicated by an input voice signal inputted through a microphone (1).

3. A pattern recognizing method according to claim 2, wherein in the extracting process, the input voice signal is analyzed for each window length, and is converted into an observed symbol series for each window length.

4. The pattern recognizing method according to any one of claims 1 to 3, wherein said method further comprises a process of calculating the average matrix in advance and storing the calculated average matrix, wherein
    in the performing process, the comparison is performed by using the average matrix stored in the calculating process.

5. The pattern recognizing method according to claim 4, wherein the calculating process is performed when at least one of the plurality of standard patterns is changed.

6. A pattern recognizing apparatus for recognizing an input voice pattern by using a probability model, in which each of a plurality of standard patterns is expressed as a probability distribution defined by an average vector and a covariance matrix respectively, said pattern recognizing apparatus comprising:

a classifying device arranged to classify, in use, the standard patterns into a predetermined number of classes;
a calculating device arranged to calculate, in use, for each of the classes an average matrix of the covariance matrices of the standard patterns in the class;
an extracting device (2) arranged to extract, in use, a characteristic vector which indicates a characteristic feature of the input pattern;
a comparison performing device (3, 4) arranged to perform, in use, a comparison based on a probability calculation between the extracted characteristic vector and respective one of the standard patterns by using the average matrix of the class to which the respective one of the standard pattern belongs as the covariance matrix for the respective one of the standard patterns; and
a recognizing device (5) arranged to recognize, in use, the input pattern on the basis of a result of the performed comparison.

7. A pattern recognizing apparatus according to claim 6, wherein said apparatus further comprises a memory device (3) for storing the average matrix which is calculated in advance.

8. A pattern recognizing apparatus according to any one of claims 6 or 7, wherein said apparatus further comprises a memory device (3) for storing the standard patterns which are prepared in advance.

9. A pattern recognizing apparatus according to any one of claims 6 to 8, wherein the input pattern comprises a pattern of a pronounced voice which is indicated by an input voice signal inputted through a microphone (1).

10. A pattern recognizing apparatus according to claim 9, wherein, in the extracting device (2), the input voice signal is analyzed for each window length, and is converted into an observed symbol series for each window length.

11. A program storage device (200) readable by a computer (100) for a pattern recognition, tangibly embodying a program of instructions executable by said computer to perform method processes for recognizing an input voice pattern by using a probability model, in which each of a plurality of standard patterns is expressed as a probability distribution defined by an average vector and a covariance matrix respectively, said method processes comprising the steps of:

classifying the standard patterns into a predetermined number of classes;
for each of the classes, calculating an average matrix of the covariance matrices of the standard patterns in the class;
extracting a characteristic vector which indicates a characteristic feature of the input pattern;
performing a comparison based on a probability calculation between the extracted characteristic vector and respective one of the standard patterns by using the average matrix of the class to which the respective one of the standard patterns belongs as the covariance matrix for the respective one of the standard patterns; and
recognizing the input pattern on the basis of a result of the performed comparison.

12. A program storage device (200) according to claim 11, wherein the input pattern comprises a pattern of a pronounced voice which is indicated by an input voice signal inputted through a microphone (1).

13. A program storage device according to claim 12, wherein, in the extracting process, the input voice signal is analyzed for each window length, and is converted into an observed symbol series for each window length.

**Patentansprüche**

1. Musterkennungsverfahren zum Erkennen eines Eingabesprachmusters unter Verwendung eines Wahrscheinlichkeitsmodells, in weichem jedes von einer Vielzahl von Standardmustern als eine durch einen Durchschnittsvektor bzw. eine Kovarianzmatrix definierte Wahrscheinlichkeitsverteilung ausgedrückt wird, wobei das Mustererkennungsverfahren die Schritte umfasst:

Klassifizieren der Standardmuster in eine vorbestimmte Anzahl von Klassen;

für jede von den Klassen, Berechnen einer Durchschnittsmatrix der Kovarianzmatrizen der Standardmuster in der Klasse;

Extrahieren eines charakteristischen Vektors, welcher ein charakteristisches Merkmal des Eingabemusters darstellt;

Durchführen eines Vergleichs auf der Basis einer Wahrscheinlichkeitsberechnung zwischen dem extrahierten charakteristischen Vektor und dem jeweiligen von den Standardmustern unter Verwendung der Durchschnittsmatrix der Klasse, zu welcher das jeweilige Muster gehört, als die Kovarianzmatrix für das jeweilige von den Standardmustern; und

Erkennen des Eingabemusters auf der Basis eines Ergebnisses des durchgeführten Vergleichs.

2. Mustererkennungsverfahren nach Anspruch 1, wobei das Eingabemuster ein Muster einer ausgesprochenen Sprache umfasst, welche durch ein über ein Mikrophon (1) eingegebenes Eingabesprachsignal dargestellt wird.

3. Mustererkennungsverfahren nach Anspruch 2, wobei in dem Extraktionsprozess das Eingabesprachsignal für jede Fensterlänge analysiert wird, und in eine Reihe beobachteter Symbole für jede Fensterlänge umgewandelt wird.

4. Mustererkennungsverfahren nach einem der Ansprüche 1 bis 3, wobei das Verfahren ferner einen Prozess zur Berechnung der Durchschnittsmatrix im Voraus und zur Speicherung der berechneten Durchschnittsmatrix umfasst, wobei in dem Durchführungsprozess der Vergleich unter Verwendung der in dem Berechnungsprozess gespeicherten Durchschnittsmatrix durchgeführt wird.

5. Mustererkennungsverfahren nach Anspruch 4, wobei der Berechnungsprozess durchgeführt wird, wenn wenigstens eines von Vielzahl von Standardmustern verändert ist.

6. Musterkennungsvorrichtung zum Erkennen eines Eingabesprachmusters unter Verwendung eines Wahrscheinlichkeitsmodells, in welchem jedes von einer Vielzahl von Standardmustern als eine durch einen Durchschnittsvektor bzw. eine Kovarianzmatrix definierte Wahrscheinlichkeitsverteilung ausgedrückt wird, wobei die Mustererkennungsvorrichtung umfasst:

eine Klassifizierungseinrichtung, um, im Einsatz, die Standardmuster in eine vorbestimmte Anzahl von Klassen zu klassifizieren;

eine Berechnungseinrichtung, um, im Einsatz, für jede von den Klassen eine Durchschnittsmatrix der Kovarianzmatrizen der Standardmuster in der Klasse zu berechnen;

eine Extraktionseinrichtung (2), um, im Einsatz, einen charakteristischen Vektor zu extrahieren, welcher ein charakteristisches Merkmal des Eingabemusters darstellt;

eine Vergleichsdurchführungseinrichtung (3, 4), die dafür eingerichtet ist, im Einsatz, einen Vergleich auf der Basis einer Wahrscheinlichkeitsberechnung zwischen dem extrahierten charakteristischen Vektor und dem jeweiligen von den Standardmustern unter Verwendung der Durchschnittsmatrix der Klasse durchzuführen, zu welcher das jeweilige Muster als die Kovarianzmatrix für das jeweilige von den Standardmustern gehört; und

eine Erkennungseinrichtung (5), um, im Einsatz, das Eingabemuster auf der Basis eines Ergebnisses des durchgeführten Vergleichs zu erkennen.

7. Mustererkennungsvorrichtung nach Anspruch 6, wobei die Vorrichtung ferner eine Speichereinrichtung (3) zum Speichern der Durchschnittsmatrix umfasst, welche im Voraus berechnet wird.

8. Mustererkennungsvorrichtung nach einem der Ansprüche 6 oder 7, wobei die Vorrichtung ferner eine Speichereinrichtung (3) zum Speichern der Standardmuster umfasst, welche im Voraus vorbereitet werden.

9. Mustererkennungsvorrichtung nach einem der Ansprüche 6 bis 8, wobei das Eingabemuster ein Muster einer ausgesprochenen Sprache umfasst, welche durch ein über ein Mikrophon (1) eingegebenes Sprachsignal dargestellt wird.

10. Mustererkennungsvorrichtung nach Anspruch 9, wobei in der Extraktionseinrichtung (2) das Eingabesprachsignal für jede Fensterlänge analysiert wird, und in eine Reihe beobachteter Symbole für jede Fensterlänge umgewandelt wird.

11. Durch einen Computer (100) für Mustererkennung lesbare Programmspeichereinrichtung (200), die berührbar ein Programm von durch den Computer ausführbaren Anweisungen verkörpert, um Verfahrensprozesse zum Erkennen eines Eingabesprachmusters unter Verwendung eines Wahrscheinlichkeitsmodells, in welchem jedes von einer Vielzahl von Standardmustern als eine durch einen Durchschnittsvektor bzw. eine Kovarianzmatrix definierte Wahrscheinlichkeitsverteilung ausgedrückt wird, durchzuführen, wobei die Verfahrensprozesse die Schritte umfassen:

Klassifizieren der Standardmuster in eine vorbestimmte Anzahl von Klassen;

für jede von den Klassen, Berechnen einer Durchschnittsmatrix der Kovarianzmatrizen der Standardmuster in der Klasse;

Extrahieren eines charakteristischen Vektors, welcher ein charakteristisches Merkmal des Eingabemusters darstellt;

Durchführen eines Vergleichs auf der Basis einer Wahrscheinlichkeitsberechnung zwischen dem extrahierten charakteristischen Vektor und dem jeweiligen von den Standardmustern unter Verwendung der Durchschnittsmatrix der Klasse, zu welcher das jeweilige Muster gehört, als die Kovarianzmatrix für das jeweilige von den Standardmustern; und

Erkennen des Eingabemusters auf der Basis eines Ergebnisses des durchgeführten Vergleichs.

**12.** Programmspeichereinrichtung (200) nach Anspruch 11, wobei das Eingabemuster ein Muster einer ausgesprochenen Sprache umfasst, welche durch ein über ein Mikrophon (1) eingegebenes Sprachsignal dargestellt wird.

**13.** Programmspeichereinrichtung (200) nach Anspruch 12, wobei in dem Extraktionsprozess das Eingabesprachsignal für jede Fensterlänge analysiert wird, und in eine Reihe beobachteter Symbole für jede Fensterlänge umgewandelt wird.

**Revendications**

**1.** Procédé de reconnaissance de motif pour reconnaître un motif vocal d'entrée en utilisant un modèle de probabilité, dans lequel chacun d'une pluralité de motifs standard est exprimé sous la forme d'une distribution de probabilités définie par un vecteur de moyenne et une matrice des covariances respectivement, ledit procédé de reconnaissance de motif comprenant les opérations consistant à :

classer les motifs standard en un nombre prédéterminé de classes ;
pour chacune des classes, calculer une matrice moyenne des matrices des covariances des motifs standard dans la classe ;
extraire un vecteur caractéristique qui indique une propriété caractéristique du motif d'entrée ;
effectuer une comparaison fondée sur un calcul de probabilité entre le vecteur caractéristique extrait et l'un respectif des motifs standard en utilisant la matrice moyenne de la classe à laquelle celui respectif des motifs standard respectif appartient comme la matrice des covariances pour celui respectif des motifs standard ; et
reconnaître le motif d'entrée d'après un résultat de la comparaison effectuée.

**2.** Procédé de reconnaissance de motif selon la revendication 1, dans lequel le motif d'entrée comprend un motif d'une voix prononcée qu'indique un signal vocal d'entrée introduit par l'intermédiaire d'un microphone (1).

**3.** Procédé de reconnaissance de motif selon la revendication 2, dans lequel dans le processus d'extraction, le signal vocal d'entrée est analysé pour chaque longueur de fenêtre et est converti en une suite de symboles observés pour chaque longueur de fenêtre.

**4.** Procédé de reconnaissance de motif selon l'une quelconque des revendications 1 à 3, dans lequel ledit procédé comprend de plus un processus consistant à calculer la matrice moyenne à l'avance et à enregistrer la matrice moyenne calculée, dans lequel
dans ce processus, la comparaison est effectuée en utilisant la matrice moyenne enregistrée dans le processus de calcul.

**5.** Procédé de reconnaissance de motif selon la revendication 4, dans lequel le processus de calcul est exécuté quand au moins un de la pluralité de motifs standard est changé.

**6.** Dispositif de reconnaissance de motif pour reconnaître un motif vocal d'entrée en utilisant un modèle de probabilité, dans lequel chacun d'une pluralité de motifs standard est exprimé sous la forme d'une distribution de probabilités définie par un vecteur de moyenne et une matrice des covariances respectivement, ledit dispositif de reconnaissance de motif comprenant :

un dispositif de classement conçu pour classer, en service, les motifs standard dans un nombre prédéterminé de classes ;
un dispositif de calcul conçu pour calculer, en service, pour chacune des classes une matrice moyenne des matrices des covariances des motifs standard dans la classe ;
un dispositif d'extraction (2) conçu pour extraire, en service, un vecteur caractéristique qui indique une propriété caractéristique du motif d'entrée ;

un dispositif de comparaison (3, 4) conçu pour exécuter, en service, une comparaison fondée sur un calcul de probabilité entre le vecteur caractéristique extrait et l'un respectif des motifs standard en utilisant la matrice moyenne de la classe à laquelle celui respectif des motifs standard appartient comme la matrice des covariances pour celui respectif des motifs standard ; et

un dispositif de reconnaissance (5) conçu pour reconnaître, en service, le motif d'entrée d'après un résultat de la comparaison effectuée.

7. Dispositif de reconnaissance de motif selon la revendication 6, dans lequel ledit dispositif comprend de plus un dispositif de mémoire (3) pour enregistrer la matrice moyenne qui est calculée à l'avance.

8. Dispositif de reconnaissance de motif selon l'une quelconque des revendications 6 ou 7, dans lequel ledit dispositif comprend de plus un dispositif de mémoire (3) pour enregistrer les motifs standard qui sont préparés à l'avance.

9. Dispositif de reconnaissance de motif selon l'une quelconque des revendications 6 à 8, dans lequel le motif d'entrée comprend un motif d'une voix prononcée qui est indiqué par un signal vocal d'entrée introduit par l'intermédiaire d'un microphone (1).

10. Dispositif de reconnaissance de motif selon la revendication 9, dans lequel, dans le dispositif d'extraction (2), le signal vocal d'entrée est analysé pour chaque longueur de fenêtre et est converti en une suite de symboles observés pour chaque longueur de fenêtre.

11. Dispositif d'enregistrement de programme (200) pouvant être lu par un ordinateur (100) pour une reconnaissance de motif, contenant de façon tangible un programme d'instructions pouvant être exécutées par ledit ordinateur pour exécuter des processus de procédé pour reconnaître un motif vocal d'entrée en utilisant un modèle de probabilité, dans lequel chacun d'une pluralité de motifs standard est exprimé sous la forme d'une distribution de probabilités définie par un vecteur de moyenne et une matrice des covariances respectivement, lesdits processus de procédé comprenant les opérations consistant à :

classer les motifs standard dans un nombre prédéterminé de classes ;
pour chacune des classes, calculer une matrice moyenne des matrices des covariances des motifs standard dans la classe ;
extraire un vecteur caractéristique qui indique une propriété caractéristique du motif d'entrée ;
exécuter une comparaison fondée sur un calcul de probabilité entre le vecteur caractéristique extrait et l'un respectif des motifs standard en utilisant la matrice moyenne de la classe à laquelle celui respectif des motifs standard appartient comme la matrice des covariances pour celui respectif des motifs standard ; et
reconnaître le motif d'entrée d'après un résultat de la comparaison effectuée.

12. Dispositif d'enregistrement de programme (200) selon la revendication 11, dans lequel le motif d'entrée comprend un motif d'une voix prononcée qui est indiqué par un signal vocal d'entrée introduit par l'intermédiaire d'un microphone (1).

13. Dispositif d'enregistrement de programme selon la revendication 12 dans lequel, dans le processus d'extraction, le signal vocal d'entrée est analysé pour chaque longueur de fenêtre et est converti en suite de symboles observés pour chaque longueur de fenêtre.

# FIG. 1

$a11=0.3$

$c11=\begin{bmatrix} a:0.8 \\ b:0.2 \end{bmatrix}$

$a22=0.4$

$c22=\begin{bmatrix} a:0.3 \\ b:0.7 \end{bmatrix}$

$S_1$    $a12=0.5$    $S_2$    $a23=0.6$    $S_3$

$c12=\begin{bmatrix} a:1.0 \\ b:0.0 \end{bmatrix}$

$c23=\begin{bmatrix} a:0.5 \\ b:0.5 \end{bmatrix}$

$a13=0.2$

$c13=\begin{bmatrix} a:0.0 \\ b:1.2 \end{bmatrix}$

# FIG. 2A

DISCRETE
DISTRIBUTION

# FIG. 2B

CONTINUOUS
DISTRIBUTION

EP 0 932 143 B1

# FIG. 3

RECOGNITION RESULT

5 JUDGMENT

4 PROBABILITY CALCULACTION

3 DICTIONARY (HMM)

2 FEATURE EXTRACTION

1

# FIG. 4